# EUROPEAN PATENT SPECIFICATION

(11) **EP 2 050 590 B1**
(45) Date of publication and mention of the grant of the patent: **22.05.2013**
(21) Application number: 07425646.2
(22) Date of filing: 15.10.2007
(51) Int. Cl.: B60C 27/10

(54) **Snow chains mounted from the outside, with a device for fastening to the wheel**
Von außen montierte Schneeketten mit einer Vorrichtung zu ihrer Befestigung am Rad
Chaînes à neige montées depuis le côté extérieur, avec un dispositif de fixation à la roue

(43) Date of publication of application: 22.04.2009
(73) Proprietor: Thule S.p.A., 23847 Molteno (Lecco) (IT)
(72) Inventor: Arrigoni Neri, Marco, 23811 Ballabio (Lecco) (IT); Farina, Luigi, 23843 Dolzago (Lecco) (IT); Necchi, Stefano, 23874 Montevecchia (Lecco) (IT)
(74) Representative: Petruzziello, Aldo

(56) References cited:
- EP-A- 0 528 506
- EP-A- 1 604 843
- WO-A-03/011618

## Description

The present invention refers to an anti-skid devices, commonly known as snow chains, adapted to be mounted from the part of the wheel facing towards the outside of the vehicle.

Known to the art are snow chains mounted from the outside that comprise a central hub from which extends radially a plurality of arms or spokes joined to a terminal element, which embraces the tread of the tyre. The terminal elements of the spokes are joined to portions of chain, which follow the tread of the tyre. In this manner the portions of chain can scratch or bite into the snow or into the ice on the road surface to exert a greater friction and to avoid skidding or slipping of the tyres.

For mounting this type of snow chains a fastening device is provided, which is fastened to a wheel bolt or nut. A tensioning strap or chain, which passes through a tensioning/locking device mounted on the hub of the snow chains, is constrained to the fastening device. Thus the user, by pulling the strap manually or by means of a tensioning device, brings the hub of the anti-skid device close to the hub of the wheel, tensioning the snow chains.

Such a type of snow chain presents various drawbacks, due to the fastening device. In fact the user must normally use a special key to screw-fix the fastening device to a wheel bolt.

In some cases a lever integral with the fastening device is provided to allow the screwing thereof. The end of the tensioning strap is fastened onto said lever. Given that the wheel bolts are peripheral with respect to the hub of the wheel, when the fastening device is firmly fastened to the bolt, it generally happens that the operating lever is far from the axis of the wheel hub. Therefore, if the tensioning of the snow chains is done, the hub of the anti-skid device, which is attracted by the strap integral with the lever of the fastening device, will be out of axis with respect to the wheel hub. As a result, the snow chains are not mounted correctly and are not tensioned evenly on the tyre tread, so they tend to slip out of the wheel.

To overcome said drawback, according to the prior art the lever of the fastening device is rotated in the unscrewing direction, until said lever is positioned to coincide with the axis of the hub. It is obvious that such a solution does not ensure a firm anchoring of the fastening device to the wheel bolt. As a result, the fastening device can become detached from the wheel bolt with a consequent loosening of the snow chains and escape thereof from the wheel.

In some types of wheel rims, with the lever integral with the fastening device, it is not possible, or at least easy, to carry out the clamping on the wheel bolt in that there is not materially sufficient room to allow a continuous rotation of the lever.

EP 528506 discloses a device for attaching the holding device of an antiskid device to a wheel nut comprising a connection part which has a connector pin which is provided with a transverse bore for a ball with the aid of which it can be locked into a bore of a wheel nut.

WO 03/011618 discloses a nonskid device for vehicle wheels comprising a holding element situated in the region of the wheel axis and used with elastic holding arms holding a chain mesh, a tension cable for introducing tension forces into the holding arms, and a pivotable tension lever connected to said tension cable for introducing a defined tensile stress into the tension cable.

EP 1604843 discloses an assembly to attach a snow chain to a bolt of a vehicle wheel comprising tightening-bush means and a centring rod whereon an attachment element slides, the bush means comprising a socket-like body wherein a bush for tightening on said bolt slides, the relative sliding between the bush and the socket-like body being accomplished by a screw/nut coupling between two tightening elements, one of these being capable to be coupled in rotation with the centring rod, the centring rod being disengaged from the socket-like body.

Object of the present invention is to overcome at least a part of the drawbacks of the prior art by providing a snow chain with a device for fastening it to the wheel with a mounting from the outside that is reliable and safe when the vehicle is travelling.

Another object is to provide such a snow chain that is practical and simple and quick to mount.

These objects are achieved in accordance with the invention with the characteristics listed in appended independent claim 1.

Advantageous embodiments of the invention are apparent from the dependent claims.

According to the invention, the anti-skid device mounted from the outside comprises:
- a plurality of arms, protruding radially from a hub, which is disposed on the outside of the wheel and ends in terminal elements destined to be disposed on the tyre tread,
- portions of chain connected to the terminal elements so as to form a ring on the tyre tread,
- a fastening device provided with an operating lever that operates operating means that act on clamping means adapted to clamp a wheel-fastening bolt or nut, and
- a tensioning strap or chain constrained to the operating lever so as to pass through the hub of the anti-skid device to be tensioned by the user, to bring the hub of the anti-skid device close to the hub of the wheel.

The fastening device comprises disconnectible means which maintain the operating lever in engagement with the operating means and which can be disconnected by the user to be able to rotate the lever freely without operating the operating means.

In this manner, when the wheel bolt is firmly clamped the user operates the disconnectible means to be able to rotate the operating lever further, in one direction or the other, until the attachment of the tensioning strap is disposed in register with the wheel hub.

Further characteristics of the invention will be made clearer by the detailed description that follows, referring to a purely exemplifying and therefore non limiting embodiment thereof, illustrated in the appended drawings, wherein:
Figure 1 is a diagrammatic perspective view, illustrating the anti-skid device according to the invention mounted on a wheel;
Figure 2 is a perspective view of a device for fastening the anti-skid device of Figure 1 to the wheel;
Figure 3 is a view like Figure 2, but illustrating the device for fastening to the wheel in an adjustment position;
Figure 4 is an exploded perspective view of the device for fastening to the wheel of Figure 2;
Figures 5 and 6 are two diagrammatic views, partially illustrating the outer side of wheel during the steps of mounting and of adjusting, respectively, the fastening device of Figure 2; and
Figure 7 is a diagrammatic view, partially illustrating the outer side of a wheel during the removal step of the fastening device of Figure 2.

The anti-skid device according to the invention, denoted as a whole with the reference numeral 1, is described with the aid of the figures.

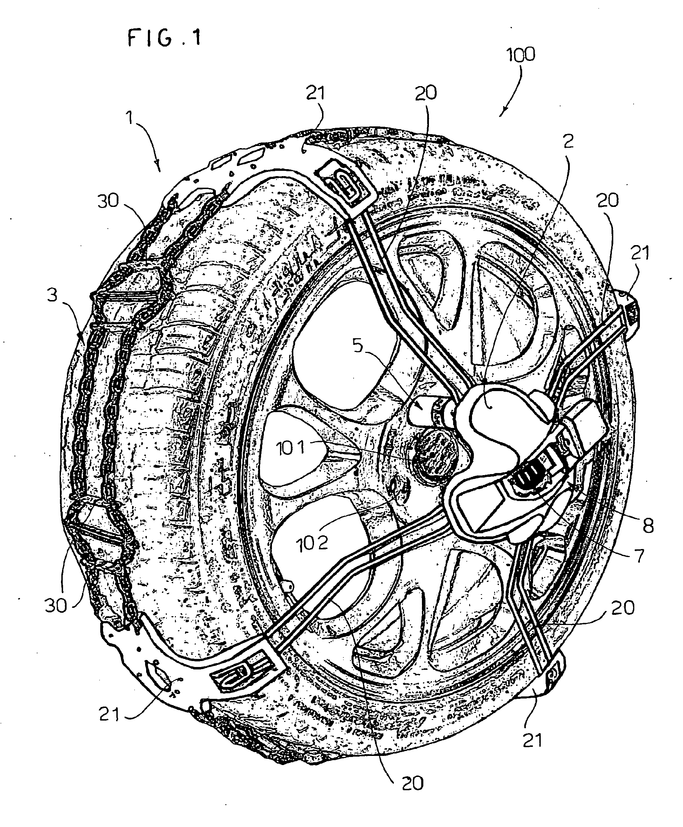

With reference for now to Figure 1, the anti-skid device 1 is illustrated mounted on a wheel 100. The anti-skid device 1 comprises a hub 2 designed to be disposed to coincide with the hub 101 of the wheel. Arms or spokes 20 depart radially from the hub 2 of the anti-skid device. In the figures four arms 20 are illustrated, each consisting of a pair of suitably shaped metal rods.

The ends of the arms 20 are connected to respective terminal elements 21 bent with a radius of curvature that follows the edge of the tyre, so that the terminal elements 21 can be disposed on the tyre tread of the wheel. Portions of chain 3 which are disposed in a ring along the tyre tread are joined to the terminal elements 21. By way of example, in the figure two portions of chain 3 disposed substantially parallel to each other are illustrated. At suitable intervals, the portions of chain 3 are joined to each other and held in position by transverse plates 30 which are disposed edgeways on the tyre tread, so as to improve the friction with the road surface, by biting into the ice or into the snow.

With reference to figures 1, 5, 6 and 7, the anti-skid device 1 comprises a fastening device 5 adapted to be fixed to a bolt or nut 102 fastening the wheel 100.

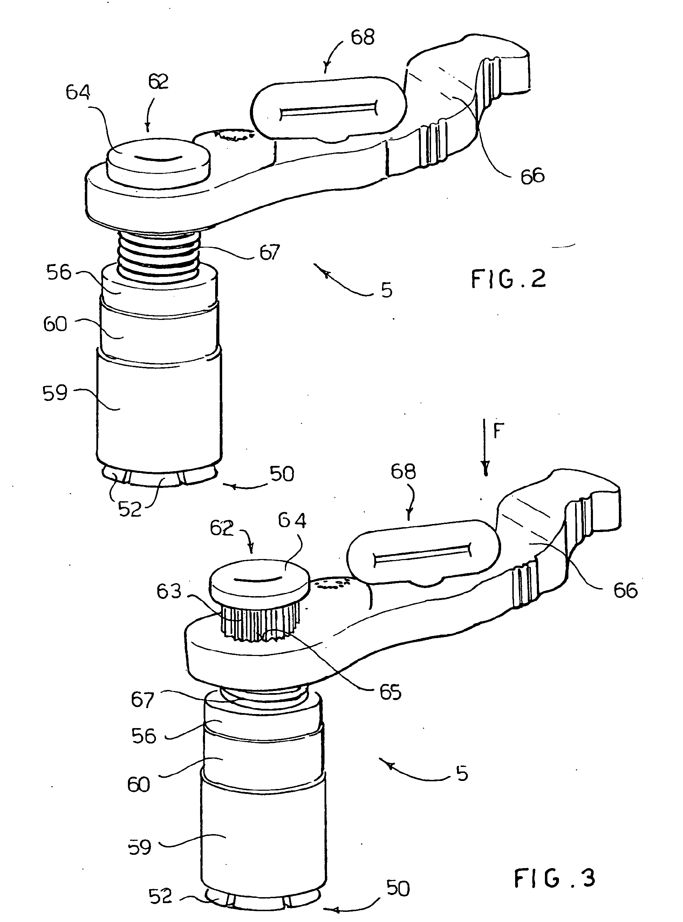

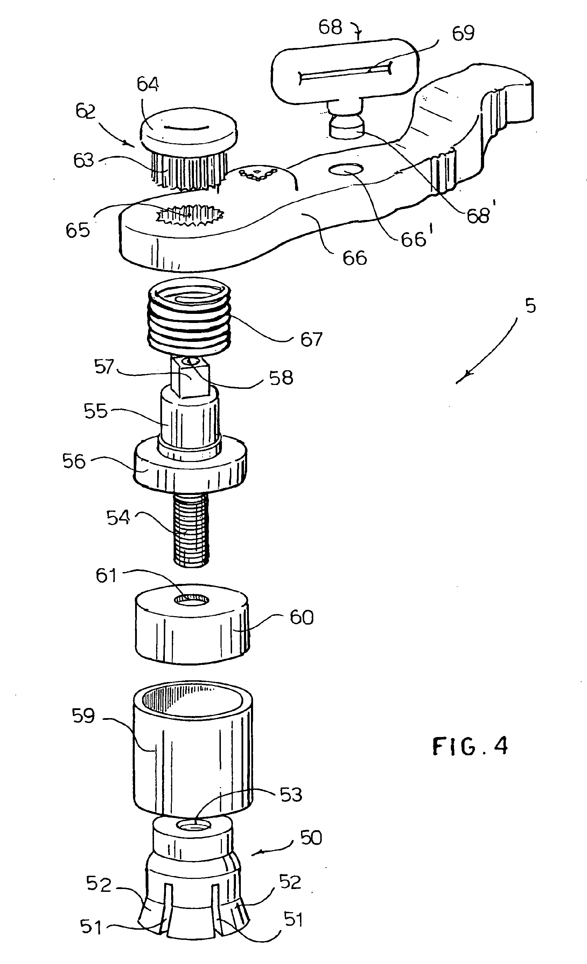

As shown better in figures 2-4, the fastening device 5 comprises a truncated conical head 50 having a seat adapted to accommodate the head of a wheel fastening bolt or nut 102. A plurality of longitudinal slots 51 is formed in the truncated conical head 50 so as to define a plurality of tongues 52 adapted to bend elastically.

A threaded hole 53 into which is screwed a screw 54 integral with a cylindrical tang 55 is formed axially on the top part of the head 50. At the bottom end of the tang 55 an abutment flange 56 with a larger diameter is provided, which extends around the screw 54. A square or polygonal pin 57 provided with an axial threaded hole 58 extends axially on the upper end of the tang 55.

On the head 50 a cylindrical operating element 59 is mounted, the lower edge of which abuts against the tapering tongues 52 of the head 50. On the upper edge of the operating element 59 a disc-shaped positioning element 60, acting as a spacer and provided with an axial hole 61 to allow the passage of the screw 54, is mounted. In this manner, when the screw 54 is screwed into the threaded hole 53 of the head, the abutment flange 56 pushes the positioning element 60 which in turn pushes the operating element 59 onto the tongues 52 of the head, causing the inward bending thereof.

The square pin 57 of the tang 55 engages in a square or polygonal hole of a gear 62. The gear 62 can be, for example, a splined shaft 63, which has a plurality of longitudinal ribs and grooves, or even a sprocket wheel or the like. The gear 62 has an upper flange 64 with a larger diameter than the splined shaft 63. The gear 62 is fixed to the square pin 57 by means of a screw (not shown), which is screwed into the threaded hole 58 of the square pin.

The splined shaft 63 engages in a grooved hole 65 of an operating lever 66 adapted to be operated manually by the user. A helical spring 67 is disposed around the tang 55 between the abutment flange 56 and the operating lever 66. The spring 67 pushes the operating lever 66 towards the flange 64 of the gear 62, ensuring that the splined shaft 63 engages inside the grooved hole 65 of the lever, as shown in figure 2. In this manner, a rotation of the lever 66 causes a rotation of the gear 62 and thus of the tang 55 integral with the gear 62. As a result, the screw 54 screws/unscrews into the threaded hole 53 of the head 50 and the abutment flange 56 moves towards/away from the head 50, thus the lower edge of the operating element 59 exerts a pressure or releases the pressure on the tongues 52 of the head.

On the other hand, as shown in figure 3, if the user pushes the lever 66 towards the head 50, in the direction of the arrow F, the spring 67 is compressed until the splined shaft 63 is released from the grooved hole 65 of the lever 66. In this situation, the lever 66 can be rotated around the cylindrical tang 55, which supports the gear 62 without causing rotation thereof.

Obviously the spring 67 can be replaced by any other equivalent elastic means which performs the same function of pushing the lever 66 into a position in which it meshes with the gear 62.

In the central part of the operating lever 66 a buckle 68 facing towards the opposite side of the head 50 is mounted. The buckle 68 has a slot 69 adapted to allow the passage of a strap. The buckle 68 has a pin 68' adapted to engage in a snap coupling relationship inside a hole 66' formed in the operating lever 66, so as to be able to rotate. Obviously, the pin 68' can be engaged in the hole 66' with the possibility of rotation by means of a Seeger ring, of spring pins and the like.

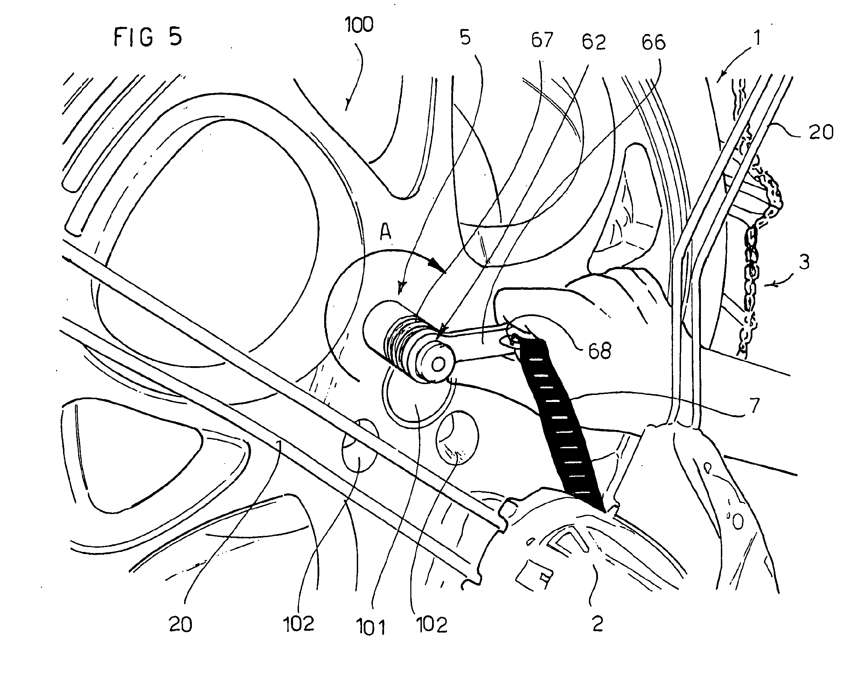

With reference to figures 5, 6 and 7, the end of a tensioning strap or chain 7 is fixed to the buckle 68 of the lever 66 of the fastening device 5. As shown in figure 1, the strap 7 is made to pass through the hub 2 of the anti-skid device and is connected to a tensioning and locking device 8 constrained to the hub 2.

The mounting of the anti-skid device 1 according to the invention is described hereunder with reference to figures 1, 5, 6 and 7.

Initially the operator grips two spokes 20 of the anti-skid device 1 to mount them from the outside of the wheel, disposing the ring formed by the portions of chain 3 on the tyre tread.

As shown in figure 5 the operator subsequently grips the operating lever 66 of the fastening device 5, disposes the head 50 of the fastening device on a bolt 102 of the tyre and operates the operating lever 66 in the screwing direction (indicated by the arrow A in figure 5), so as to cause the rotation of the gear 62 in the screwing direction and thus the clamping of the wheel bolt.

In the case of particular wheels rims, which do not allow a continuous rotation of the lever 66, an alternative intermittent action is possible, disengaging it from the gear to allow a backward rotation thereof and then re-engaging it again for a further forward rotation.

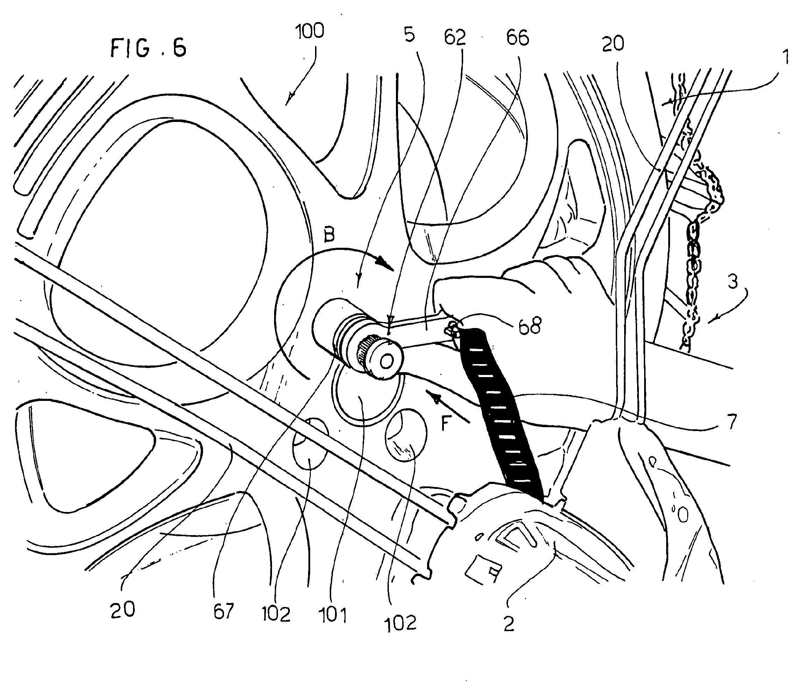

Once the fastening device 5 is firmly clamped to the wheel bolt and further operation of the lever in the screwing direction is not possible, as shown in figure 6 the operator pushes the operating lever 66 towards the wheel (in the direction of the arrow F of Figure 6), elastically compressing the spring 67 so as to cause the disengagement of the splined shaft of the gear 62 from the grooved hole of the lever 66. At this point, the lever 66 can be further rotated in the direction of the arrow B (Figure 6) or in the opposite direction, until the buckle 68 to which the strap 7 is constrained is situated to coincide exactly with the axis of the wheel hub 101.

Once such a position of alignment has been reached, the operator releases the lever 66 and the spring 67 pushes the lever back into the position in which the splined shaft of the gear engages in the grooved hole of the lever.

The strap 7 is tensioned manually or by means of the tensioning device 8, so as to bring the hub 2 of the anti-skid device towards the buckle 68, which is situated to coincide with the hub 101 of the wheel. Once the tensioning of the anti-skid device 1 has been performed, the tensioning strap 7 is locked to the hub 2 of the anti-skid device.

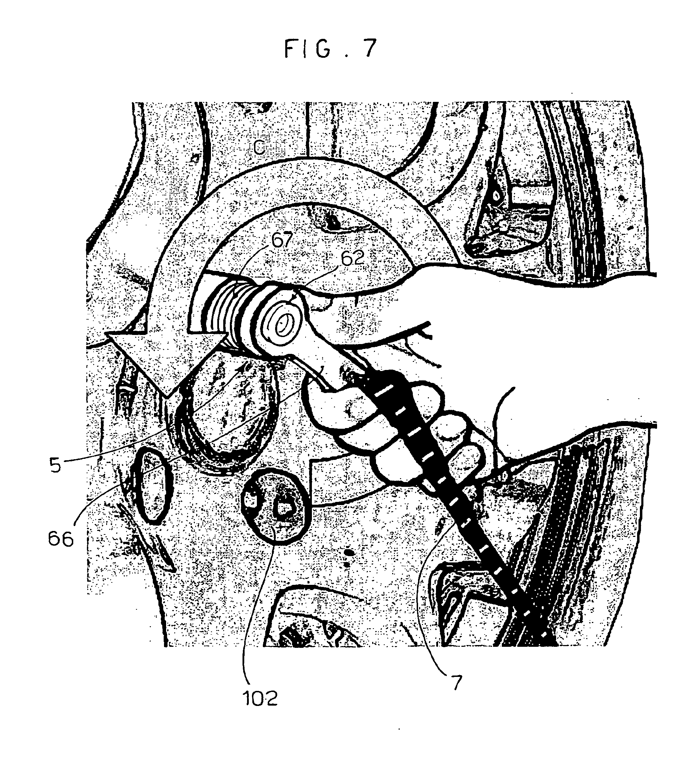

For removing the snow chains, the tensioning strap 7 is loosened/unlocked from its tensioning/locking device 8 so as to remove the portions of chain 3 from the tyre. Lastly, as shown in figure 7, the operating lever 66 of the fastening device is operated in the unscrewing direction (arrow C in Figure 7) so as to unlock the head of the fastening device from the wheel bolt.

Numerous changes and modifications of detail within the reach of a person skilled in the art can be made to the present embodiment of the invention without thereby departing from the scope of the invention as set forth in the appended claims.

## Claims

1. An anti-skid device (1) mounted from the outside, comprising:
- a plurality of arms (20) protruding radially from a hub (2), which is disposed on the outside of the wheel and which end in terminal elements (21) destined to be disposed on the tread of the tyre,
- portions of chain (3) connected to said terminal elements (21) so as to form a ring on the tyre tread,
- a fastening device (5) provided with an operating lever (66) that operates operating means (62, 54, 60, 59) that act on clamping means (50) adapted to be clamped on a wheel-fastening bolt or nut (102), and
- a tensioning strap or chain (7) constrained to said operating lever (66) so as to pass through the hub (2) of the anti-skid device (1) to be tensioned by the user, so as to bring the hub (2) of the anti-skid device (1) close to the hub (101) of the wheel, **characterised in that**
said fastening device (5) comprises disconnectable means (67) which maintain the operating lever (66) in engagement with said operating means (62) and which can be disconnected by the user, to be able to rotate the lever freely, without operating the operating means, said disconnectable means (67) being elastic means which push said lever (66) into a position of engagement with said operating means (62) and can be compressed to disengage the lever (66) from said operating means.

2. An anti-skid device (1) according to claim 1, **characterised in that** said operating means comprise a gear (62) which meshes with a complementary gear (65) formed in said operating lever.

3. An anti-skid device (1) according to claim 2, **characterised in that** said gear (62) of the operating means comprises a splined shaft (63) which engages in a grooved hole (65) formed in said operating lever (66).

4. An anti-skid device (1) according to claim 2 or 3, **characterised in that** said operating means comprise a screw (54) made integral with said gear (62) and adapted to be screwed into said clamping means (50).

5. An anti-skid device (1) according to claim 4, **characterised in that** said clamping means (50) comprise a head provided with tapered tongues (52) which clamp said wheel bolt and **in that** said screw (54) has an abutment flange (56) adapted to push an operating element (59) onto said tapered tongues (52).

6. An anti-skid device (1) according to claim 5, **characterised in that** said disconnectible elastic means comprise a helical spring (67) disposed around a cylindrical tang (55) integral with said abutment flange (56), so that the spring (67) is disposed between said abutment flange (56) and said lever (66).

7. An anti-skid device (1) according to claim 6, **characterised in that** said disconnectible elastic means (67) are interposed between said abutment flange (56) of the screw (54) and said operating lever (66).

8. An anti-skid device (1) according to claim 6 or 7, **characterised in that** said fastening device (5) further comprises a disc-shaped positioning element (60) interposed between said abutment flange (56) of the screw (54) and said operating element (59).

9. An anti-skid device (1) according to any one of the preceding claims, **characterised in that** said fastening device (5) further comprises a buckle (68), adapted to hook the tensioning strap (7), mounted with the possibility of rotation in a central position of said operating lever (66).

## Patentansprüche

1. Von außen montierte Rutschsicherungsvorrichtung (1), umfassend:
- mehrere Arme (20), die radial von einer Nabe (2) vorstehen, welche auf der Außenseite des Rads angeordnet ist, und die in Abschlusselementen (21) enden, welche auf der Lauffläche des Reifens angeordnet werden sollen,
- Kettenabschnitte (3), die zum Ausbilden eines Rings auf der Reifenlauffläche mit den Abschlusselementen (21) verbunden sind,
- eine Befestigungsvorrichtung (5), die mit einem Betriebshebel (66) versehen ist, welcher Betriebsmittel (62, 54, 60, 59) betreibt, die auf Einspannmittel (50) einwirken, welche dazu geeignet sind, auf einem Radbefestigungsbolzen oder -mutter (102) eingespannt zu sein, und
- einen Spannriemen oder -kette (7), der/die zum Durchlaufen der Nabe (2) der Rutschsicherungsvorrichtung (1) an dem Betriebshebel (66) eingezwängt ist und vom Benutzer gespannt werden soll, um die Nabe (2) der Rutschsicherungsvorrichtung (1) in die Nähe der Nabe (101) des Rads zu bringen,
**dadurch gekennzeichnet, dass**
die Befestigungsvorrichtung (5) Ausrückmittel (67), die den Betriebshebel (66) in Eingriff mit dem Betriebsmittel (62) halten und vom Benutzer ausgerückt werden können, um imstande zu sein, den Hebel frei zu drehen, ohne die Betriebsmittel zu betreiben, wobei die Ausrückmittel (67) elastische Mittel sind, die den Hebel (66) in eine Eingriffsposition mit den Betriebsmitteln (62) drücken und zum Entkuppeln des Hebels (66) von den Betriebsmitteln zusammengedrückt werden können.

2. Rutschsicherungsvorrichtung (1) nach Anspruch 1, **dadurch gekennzeichnet, dass** die Betriebsmittel ein Zahnrad (62) umfassen, das in ein komplementäres Zahnrad (65) einrückt, welches in dem Betriebshebel ausgebildet ist.

3. Rutschsicherungsvorrichtung (1) nach Anspruch 2, **dadurch gekennzeichnet, dass** das Zahnrad (62) der Betriebsmittel eine Zahnwelle (63) umfasst, die in ein Rillenloch (65) eingreift, welches in dem Betriebshebel (66) ausgebildet ist.

4. Rutschsicherungsvorrichtung (1) nach einem der Ansprüche 2 oder 3, **dadurch gekennzeichnet, dass** die Betriebsmittel eine Schraube (54) umfassen, die einstückig mit dem Zahnrad (62) hergestellt ist und dazu geeignet ist, in die Einspannmittel (50) geschraubt zu sein.

5. Rutschsicherungsvorrichtung (1) nach Anspruch 4, **dadurch gekennzeichnet, dass** die Einspannmittel (50) einen Kopf umfassen, der mit kegeligen Zungen (52) versehen ist, welche den Radbolzen einspannen, und dass die Schraube (54) einen Angrenzflansch (56) aufweist, der dazu geeignet ist, ein Betriebselement (59) auf die kegeligen Zungen (52) zu drücken.

6. Rutschsicherungsvorrichtung (1) nach Anspruch 5, **dadurch gekennzeichnet, dass** die elastischen Ausrückmittel eine Schraubenfeder (67) umfassen, die um eine zylindrische Angel (55) angeordnet ist, welche mit dem Angrenzflansch (56) einstückig ist, sodass die Feder (67) zwischen dem Angrenzflansch (56) und dem Hebel (66) angeordnet ist.

7. Rutschsicherungsvorrichtung (1) nach Anspruch 6, **dadurch gekennzeichnet, dass** die elastischen Ausrückmittel (67) zwischen den Angrenzflansch (56) der Schraube (54) und den Betriebshebel (66) eingeschoben sind.

8. Rutschsicherungsvorrichtung (1) nach einem der Ansprüche 6 oder 7, **dadurch gekennzeichnet, dass** die Befestigungsvorrichtung (5) ferner ein scheibenförmiges Positionierungselement (60) umfasst, das zwischen den Angrenzflansch (56) der Schraube (54) und das Betriebselement (59) eingeschoben ist.

9. Rutschsicherungsvorrichtung (1) nach einem der vorhergehenden Ansprüche, **dadurch gekennzeichnet, dass** die Befestigungsvorrichtung (5) ferner eine Schnalle (68) umfasst, die dazu geeignet ist, den Spannriemen (7) einzuhaken, und mit der Möglichkeit zum Drehen in einer zentralen Position des Betriebshebels (66) angebracht ist.

## Revendications

1. Dispositif anti-dérapage (1) monté depuis l'extérieur, comprenant :
- une pluralité de bras (20) dépassant radialement d'une plateforme (2) qui est disposée sur l'extérieur de la roue et qui se finit par des éléments terminaux (21) destinés à être posés sur la chape du pneu,
- des segments de chaîne (3) connectés auxdits éléments terminaux (21) de manière à former un anneau sur la chape du pneu,
- un dispositif de fixation (5) équipé d'un levier d'actionnement (66) qui actionne des moyens opératoires (62, 54, 60, 59) qui agissent sur des moyens de serrage (50) aptes à être serrés sur un boulon ou un écrou de fixation de roue (102) et
- une bride ou chaîne de tension (7) forcée par ledit levier d'actionnement (66) à passer à travers la plateforme (2) et le dispositif anti-dérapage (1) à tendre par l'utilisateur de manière à amener la plateforme (2) et le dispositif anti-dérapage (1) près de la plateforme (101) de la roue,
**caractérisé en ce que**
ledit dispositif de fixation (5) comprend des moyens déconnectables (67) qui maintiennent le levier d'actionnement (66) engagé dans lesdits moyens opératoires (62) et qui peuvent être déconnectés par l'utilisateur afin de pouvoir tourner le levier librement sans actionner les moyens opératoires, lesdits moyens déconnectables (67) étant des moyens élastiques qui poussent ledit levier (66) dans une position d'engagement dans lesdits moyens opératoires (62) et peuvent être compressés pour désengager le levier (66) desdits moyens opératoires.

2. Dispositif anti-dérapage (1) selon la revendication 1, **caractérisé en ce que** lesdits moyens opératoires comprennent un engrenage (62) qui s'empeigne dans un engrenage complémentaire (65) formé dans ledit levier d'actionnement.

3. Dispositif anti-dérapage (1) selon la revendication 2, **caractérisé en ce que** ledit engrenage (62) des moyens opératoires comprend un arbre cannelé (63) qui s'engage dans un trou rainuré (65) pratiqué dans ledit levier d'actionnement (66).

4. Dispositif anti-dérapage (1) selon la revendication 2 ou 3, **caractérisé en ce que** lesdits moyens opératoires comprennent une vis (54) formant bloc avec ledit engrenage (62) et apte à être vissée dans ledit moyen de serrage (50).

5. Dispositif anti-dérapage (1) selon la revendication 4, **caractérisé en ce que** ledit moyen de serrage (50) comprend une tête pourvue de languettes fuselées (52) qui serrent ledit boulon de roue et **en ce que** ladite vis (54) comporte une bride de butée (56) apte à pousser un élément opératoire (59) sur lesdites languettes fuselées (52).

6. Dispositif anti-dérapage (1) selon la revendication 5, **caractérisé en ce que** lesdits moyens élastiques déconnectables comprennent un ressort hélicoïdal (67) disposé autour d'un tenon cylindrique (55) faisant bloc avec ladite bride de butée (56), de manière à ce que le ressort (67) soit disposé entre ladite bride de butée (56) et ledit levier (66).

7. Dispositif anti-dérapage (1) selon la revendication 6, **caractérisé en ce que** lesdits moyens élastiques déconnectables (67) sont interposés entre ladite bride de butée (56) de la vis (54) et ledit levier d'actionnement (66).

8. Dispositif anti-dérapage (1) selon la revendication 6 ou 7, **caractérisé en ce que** ledit dispositif de fixation (5) comprend en outre un élément de positionnement en forme de disque (60) interposé entre ladite bride de butée (56) de la vis (54) et ledit élément opératoire (59).

9. Dispositif anti-dérapage (1) selon l'une quelconque des revendications précédentes, **caractérisé en ce que** ledit dispositif de fixation (5) comprend en outre une boucle (68) apte à l'accrochage de la bride de tension (7) et montée avec possibilité de rotation à une position centrale dudit levier d'actionnement (66).
